# EUROPÄISCHE PATENTANMELDUNG

(11) **EP 4 250 633 A1**
(43) Veröffentlichungstag der Anmeldung: **27.09.2023**
(21) Anmeldenummer: 22164098.0
(22) Anmeldetag: 24.03.2022
(51) Int. Cl.: H04L 9/32, H04L 9/40

(54) **VORRICHTUNG ZUM EMPFANG KRYPTOGRAPHISCH GESCHÜTZTER KOMMUNIKATIONSDATEN UND VERFAHREN ZUM EMPFANG KRYPTOGRAPHISCH GESCHÜTZTER KOMMUNIKATIONSDATEN**

(71) Anmelder: Siemens Aktiengesellschaft, 80333 München (DE)
(72) Erfinder: Falk, Rainer, 85586 Poing (DE)
(74) Vertreter: Siemens Patent Attorneys

(57) **Zusammenfassung**

Die Vorrichtung dient zum Empfang kryptographisch geschützter Kommunikationsdaten. Die Vorrichtung weist einen Schlüsselgenerator zur Generation von Sitzungsschlüsseln und ein mit dem Schlüsselgenerator signalverbundenes Empfangsmodul, das zum Empfang und zur Entschlüsselung kryptographisch geschützter Kommunikationsdaten mittels vom Schlüsselgenerator generierter und übermittelter Sitzungsschlüssel in eine Klartextinformation ausgebildet ist, sowie ein mit dem Empfangsmodul signalverbundenes Prüfmodul auf. Das Prüfmodul ist ausgebildet, die Klartextinformation einer Prüfung auf eine Kontextinformation, kennzeichnend einen Kommunikationskontext der verschlüsselten Kommunikationsdaten, zu unterziehen. Die Vorrichtung ist eingerichtet, abhängig von einem Ergebnis der Prüfung den Empfang oder die Entschlüsselung zu beschränken.

## Beschreibung

Die Erfindung betrifft eine Vorrichtung zum Empfang kryptographisch geschützter Kommunikationsdaten und ein Verfahren zum Empfang kryptographisch geschützter Kommunikationsdaten.

Bei Verschlüsselungsgeräten zum Empfang kryptographisch geschützter Kommunikationsdaten, beispielsweise einem Hardware Security Modul, werden üblicherweise mehrere Komponenten verwendet: Dabei sind Schlüsselgeneratoren, beispielsweise Crypto-Controller, allgemein auch als Secure Element bezeichnet, als besonders hoch geschützte Hardware-Komponenten verfügbar, die aber nur über eine relativ geringe Rechenleistung verfügen. Sie werden daher häufig für nur für die sichere Speicherung von Langzeitschlüsseln, d. h. Long-Term-Keys, und für eine Authentisierung und Bereitstellung von Sitzungsschlüsseln, d. h. Session-Keys, verwendet. Für die eigentlichen Verschlüsselungsoperationen mit hohen Performance-Anforderungen, etwa einem hohen Datendurchsatz oder einem hohen Jitter oder großem Übertragungsverzug, werden separate Krypto-Komponenten, so genannte High-Speed-Crypto-Engines, also Hochgeschwindigkeitsverschlüsselungsmodule oder Hochgeschwindigkeitsentschlüsselungsmodule, verwendet, die allerdings in der Praxis nicht das gleiche hohe Schutzniveau wie ein Schlüsselgenerator erreichen. Den Hochgeschwindigkeitsentschlüsselungsmodulen oder Hochgeschwindigkeitsverschlüsselungsmodulen wird ein von einem Schlüsselgenerator generierter Sitzungsschlüssel, d.h. ein kryptographischer Schlüssel mit relativ kurzer Gültigkeitsdauer bereitgestellt, etwa mit einer Gültigkeitsdauer von einer, 8 oder 24 Stunden, oder begrenzt für die Ver- oder Entschlüsselung eines, vorab festgelegten, begrenzten Datenvolumens.

Es besteht ein Bedarf an einer Vorrichtung und einem Verfahren, bei welchem die unzulässige Verwendung von bereitgestellten Sitzungsschlüsseln verhindert werden können. Insbesondere sollen eine Vorrichtung und ein Verfahren angegeben werden, bei welchem Angriffe erschwert oder vereitelt werden, bei denen ein Angreifer versucht, Zugriff auf einen von einem Schlüsselgenerator über eine Kommunikationsschnittstelle bereitstellbaren Sitzungsschlüssel zu erlangen.

Es ist daher Aufgabe der Erfindung, eine entsprechend verbesserte Vorrichtung und ein entsprechend verbessertes Verfahren zum Empfang kryptographisch geschützter Kommunikationsdaten.

Diese Aufgabe der Erfindung wird mit einer Vorrichtung mit den in Anspruch 1 angegebenen Merkmalen sowie mit einem Verfahren mit den in Anspruch 10 angegebenen Merkmalen gelöst. Bevorzugte Weiterbildungen der Erfindung sind in den zugehörigen Unteransprüchen, der nachfolgenden Beschreibung und der Zeichnung angegeben.

Die erfindungsgemäße Vorrichtung dient zum Empfang kryptographisch geschützter Kommunikationsdaten und weist einen Schlüsselgenerator zur Generation von Sitzungsschlüsseln und ein mit dem Schlüsselgenerator signalverbundenes Empfangsmodul, das zum Empfang und zur Entschlüsselung kryptographisch geschützter Kommunikationsdaten mittels vom Schlüsselgenerator generierter und übermittelter Sitzungsschlüssel in eine Klartextinformation ausgebildet ist, auf. Die erfindungsgemäße Vorrichtung weist zudem ein mit dem Empfangsmodul signalverbundenes Prüfmodul auf, das ausgebildet ist, die Klartextinformation einer Prüfung auf eine Kontextinformation, kennzeichnend einen Kommunikationskontext der verschlüsselten Kommunikationsdaten, zu unterziehen. Die erfindungsgemäße Vorrichtung ist dabei vorzugsweise eingerichtet, abhängig von einem Ergebnis der Prüfung den Empfang oder die Entschlüsselung zu beschränken.

Mittels der erfindungsgemäßen Vorrichtung kann vorteilhaft geprüft werden, ob ein Klartext tatsächlich in vorgesehener Weise entschlüsselt worden ist. Mittels der Prüfung der Klartextinformation auf eine Kontextinformation, die einen Kommunikationskontext der verschlüsselten Kommunikation kennzeichnet, kann eine Plausibilität des Klartexts und somit mit hoher Wahrscheinlichkeit auch eine Entschlüsselung der verschlüsselten Kommunikationsdaten mit dem zutreffenden Sitzungsschlüssel geprüft werden. Die Sicherheit in der Verwendung von Vorrichtungen zum Empfang kryptographisch geschützter Kommunikationsdaten mit einem Schlüsselgenerator zur Generation von Sitzungsschlüsseln und einem mit dem Schlüsselgenerator signalverbundenen Empfangsmodul ist folglich deutlich erhöht und insbesondere besser gegen Manipulation geschützt. Bei der erfindungsgemäßen Vorrichtung müssten Angreifer nicht allein einen Zugriff auf eine Signalverbindung zwischen Empfangsmodul und Schlüsselgenerator erlangen, sondern Angreifer müssen darüber hinaus auch den Kommunikationskontext der Klartextinformation plausibel imitieren. Infolge der nun vermehrten und zugleich miteinander in Verbindung stehenden Hürden für eine unentdeckte Manipulation der Vorrichtung ist die Sicherheit der erfindungsgemäßen Vorrichtung deutlich höher als bei bislang bekannten Vorrichtungen.

Besonders bevorzugt ist bei der Vorrichtung der Kommunikationskontext von dem Sitzungsschlüssel abhängig oder dem Sitzungsschlüssel zugeordnet, insbesondere als Kommunikationszusatz, vorzugsweise in Gestalt eines digitalen Wasserzeichens. Auf diese Weise kann erfindungsgemäß leicht sichergestellt werden, dass die Klartextinformation tatsächlich mit dem auf vorgesehene Weise generierten, d. h. dem authentischen, Sitzungsschlüssel entschlüsselt worden ist. Insbesondere ist der Kommunikationszusatz ein kryptographisch geschützter Zusatz, etwa ein digitales kryptographisch geschütztes Wasserzeichen. Auf diese Weise ist die erfindungsgemäße Vorrichtung besonders manipulationssicher ausgebildet, da eine Manipulation des Sitzungsschlüssels infolge des kryptographisch geschützten Kommunikationszusatzes besonders schwierig ist. Denn Angreifer benötigen nicht allein ein Zugriff auf eine Signalverbindung zwischen Empfangsmodul und Schlüsselgenerator, sondern zusätzlich müssen Angreifer auch den kryptographisch geschützten Kommunikationszusatz, welcher anhand der Klartextinformation nachweisbar ist, manipulieren, z.B. einen kryptographisch gültigen oder plausiblen Kommunikationszusatz nachbilden. Erfindungsgemäß ist also der Aufwand von Angreifern und folglich die Höhe des Schutzes der Vorrichtung vor Manipulation deutlich erhöht.

Vorzugsweise ist bei der erfindungsgemäßen Vorrichtung die Vorrichtung ausgebildet, einen Teil der Klartextinformation dem Prüfmodul zu übermitteln und das Prüfmodul ist zweckmäßig ausgebildet, die Klartextinformation derart einer Prüfung zu unterziehen, dass es den Teil der Klartextinformation der Prüfung unterzieht. Vorteilhaft ist es in dieser Weiterbildung nicht erforderlich, die vollständige Klartextinformation einer Prüfung zu unterziehen, sondern regelmäßig genügt es, einen Teil der Klartextinformation zu plausibilisieren. Beispielsweise ist der Teil der Klartextinformation ein Kommunikationszusatz, welcher auf eine korrekte Entschlüsselung mittels des Sitzungsschlüssels geprüft wird. So kann insbesondere eine Zusatzinformation in die Klartextinformation eingebracht sein, welche sich nur mittels des authentischen Sitzungsschlüssels in vorgesehener Weise entschlüsseln lässt. So lässt sich mittels einer korrekten Entschlüsselung des Kommunikationszusatzes die Entschlüsselung mittels des authentischen Sitzungsschlüssels einfach plausibilisieren.

Vorzugsweise umfasst bei der erfindungsgemäßen Vorrichtung die Kontextinformation eine Information über einen Nutzungszeitraum oder eine Identifizierungsinformation von Sender und/oder Empfänger und/oder ein Format der kryptographischen Kommunikationsdaten und/oder der Klartextinformation und/oder eine Protokollkonformität der Klartextinformation, insbesondere mit einem Sicherheitsprotokoll, und/oder eine Gültigkeit eines Zeitstempels oder eines Prüfwerts, insbesondere eines CRC-Prüfwerts.

Vorteilhaft kann mittels der Kontextinformationen wie vorstehend beschrieben eine Authentizität der Klartextinformation und somit auch eine Authentizität des Sitzungsschlüssels leicht verifiziert werden. So kann eine Identifizierungsinformation von Sender und/oder Empfänger mit einer vorgesehenen Sender- oder Empfängeridentität verglichen werden. Werden Kommunikationsdaten von einem bestimmten Sender erwartet und enthält die Klartextinformation eine Identifizierungsinformation genau von diesem bestimmten Sender, so können die Klartextdaten und somit indirekt auch der Sitzungsschlüssel als vertrauenswürdig eingestuft werden. Solch eine Identifizierungsinformation umfasst insbesondere eine digitale Signatur des Senders. Vorteilhaft erlaubt eine Konformitätsprüfung auf Protokollkonformität der Klartextinformation einen positiven Ausgang der Plausibilitätsprüfung dann, wenn eine tatsächlich erhaltene Klartextinformation einem vorgegebenen, vorab vereinbarten Protokoll genügt. Ein solches Protokoll kann insbesondere ein Sicherheitsprotokoll sein, wenn der jeweilige Kommunikationskontext ein Sicherheitsprotokoll vorsieht oder als wahrscheinlich gelten lässt. Auch ein Zeitstempel oder Prüfwert eines Teils des Klartextes, insbesondere ein CRC-Prüfwert, können zur Prüfung des Klartextes geeignet herangezogen werden.

In einer bevorzugten Weiterbildung der Erfindung umfasst bei der Vorrichtung die Kontextinformation ein Wasserzeichen, insbesondere ein kryptographisch geschütztes Wasserzeichen. Mittels einer solchen Kontextinformation ist auf besonders zuverlässige Weise eine Prüfung des Klartexts möglich. Denn bei einer Kontextinformation in Form eines Wasserzeichens, insbesondere eines kryptographisch geschützten Wasserzeichens, müsste eine Manipulation der Kommunikation der erfindungsgemäßen Vorrichtung nicht allein eine Manipulation einer Signalverbindung zwischen Schlüsselgenerator und Empfangsmodul erfolgreich umfassen, sondern zugleich müsste die Kontextinformation in Form des Wasserzeichens erfolgreich manipuliert werden. Dieses zusätzliche Erfordernis bildet vorteilhaft eine besonders große Hürde für eine Manipulation der Vorrichtung.

Bei der Vorrichtung gemäß der Erfindung umfasst vorzugsweise die Kontextinformation mindestens ein Prüfdatum. Insbesondere Prüfdaten wie beispielsweise Streuwerte und/oder Hashwerte sind besonders schwierig zu manipulieren. Auf diese Weise kann die Vorrichtung besonders manipulationssicher ausgebildet sein.

Die erfindungsgemäße Vorrichtung ist in einer vorteilhaften Weiterbildung zusätzlich zum Verschlüsseln von Sendeinformation in verschlüsselte Sendedaten mittels vom Sitzungsschlüsselgenerator generierter und übermittelter Sitzungsschlüssel ausgebildet. In dieser Weiterbildung ist die Vorrichtung vorzugsweise zusätzlich ausgebildet, die Verschlüsselung der Sendedaten mittels Sitzungsschlüsseln zu prüfen.

In dieser Weiterbildung der Erfindung ist die Vorrichtung nicht allein eine Vorrichtung zum Empfangen, sondern zugleich auch zum Senden verschlüsselter Kommunikationsdaten. Die Verschlüsselung der Sendedaten kann beispielsweise mittels einer Hinzufügung einer Kontrollinformation in die Sendedaten und einer nachfolgenden Prüfung der verschlüsselten Sendedaten auf die Kontrollinformation hin geprüft werden. Vorzugsweise ist die Vorrichtung eingerichtet, zusätzlich eine Kontrollinformation anstelle von Sendedaten zu verschlüsseln und die verschlüsselte Kontrollinformation auf die vorgesehene Verschlüsselung der Kontrollinformation mittels des vorgesehenen Sitzungsschlüssels zu prüfen.

Geeigneterweise ist die erfindungsgemäße Vorrichtung ein Mobilfunkgerät, insbesondere für ein terrestrisches oder satellitenbasiertes Mobilfunksystem. Insbesondere bei Mobilfunkgeräten ist eine manipulationsgeschützte Kommunikation eine zentrale Funktion, die sich erfindungsgemäß besonders zuverlässig gewährleisten lässt. Insbesondere kann das Mobilfunkgerät zum Empfang verschlüsselter Kommunikationsdaten oder verschlüsselter Kommunikationssignale des Mobilfunksystems ausgebildet sein.

Bevorzugt ist die erfindungsgemäße Vorrichtung ein industrielles IoT-Gerät, insbesondere ein Steuergerät, und vorzugsweise zum Empfang verschlüsselter Kommunikationsdaten in Form von Steuerinformation ausgebildet.

Das erfindungsgemäße Verfahren ist ein Verfahren zum Empfang kryptographisch geschützter Kommunikationsdaten mittels eines Schlüsselgenerators zur Generation von Sitzungsschlüsseln und eines mit dem Schlüsselgenerator signalverbundenen Empfangsmoduls. Bei dem erfindungsgemäßen Verfahren ist das Empfangsmodul zum Empfang und zur Entschlüsselung kryptographisch geschützter Kommunikationsdaten mittels vom Schlüsselgenerator generierter und übermittelter Sitzungsschlüssel in eine Klartextinformation ausgebildet. Bei dem erfindungsgemäßen Verfahren wird die Klartextinformation einer Prüfung auf eine Kontextinformation, kennzeichnend einen Kommunikationskontext der verschlüsselten Kommunikationsdaten, unterzogen und es wird abhängig von einem Ergebnis der Prüfung der Empfang oder die Entschlüsselung beschränkt. Mittels des erfindungsgemäßen Verfahrens lassen sich dieselben Vorteile, wie sie bereits zur erfindungsgemäßen Vorrichtung erläutert worden sind, realisieren.

Bevorzugt wird das erfindungsgemäße Verfahren wie oben beschrieben mit einer erfindungsgemäßen Vorrichtung wie vorhergehend beschrieben ausgeführt.

Nachfolgend wird die Erfindung anhand eines in der Zeichnung dargestellten Ausführungsbeispiels näher erläutert. Es zeigen:
- Fig. 1: ein erstes Ausführungsbeispiel einer erfindungsgemäßen Vorrichtung zum Empfang kryptographisch geschützter Kommunikationsdaten zur Ausführung eines ersten Ausführungsbeispiels eines erfindungsgemäßen Verfahrens schematisch in einer Prinzipskizze sowie
- Fig. 2: ein zweites Ausführungsbeispiel einer erfindungsgemäßen Vorrichtung zum Empfang kryptographisch geschützter Kommunikationsdaten zur Ausführung eines zweiten Ausführungsbeispiels eines erfindungsgemäßen Verfahrens schematisch in einer Prinzipskizze.

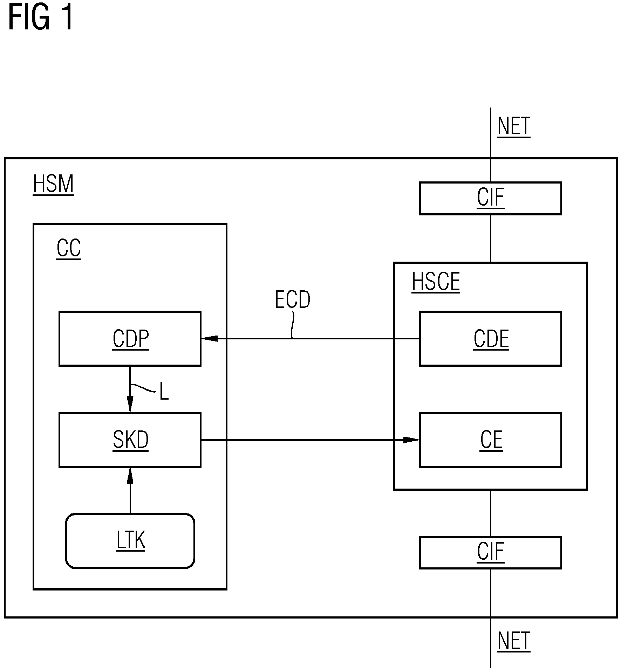

Bei dem in Fig. 1 dargestellten Ausführungsbeispiel wird eine Verschlüsselungsvorrichtung HSM in Gestalt eines Hardware Security Modules verwendet. Die Verschlüsselungsvorrichtung HSM ist ein Mobilfunkgerät, im dargestellten Ausführungsbeispiel nämlich ein mittels Mobilfunks in ein Automatisierungsnetzwerk eingebundenes industrielles IoT-Gerät (IoT = (engl.) "Internet of Things"), welches ein Industriesteuergerät bildet, oder ein Modul eines IoT-Geräts oder Industriesteuergeräts. Die Verschlüsselungsvorrichtung HSM umfasst einen Sitzungsschlüsselgenerator CC in Gestalt eines Crypto Controllers, der einen Langzeitschlüssel LTK heranzieht, um mittels eines Moduls SKD zur Festlegung eines Sitzungsschlüssels einen Sitzungsschlüssel unter Zuhilfenahme des Langzeitschlüssels zu erzeugen. Der Sitzungsschlüssel wird von dem Modul SKD zur Festlegung eines Sitzungsschlüssels an ein Kyptographiemodul CE eines Hochgeschwindigkeitsentschlüsselungsmoduls HSCE übermittelt.

Der Sitzungsschlüssel ist dabei ein kryptographischer Schlüssel, der unter Nutzung zumindest des Langzeitschlüssels LTK gebildet wird, im dargestellten Ausführungsbeispiel durch eine Schlüsselableitung oder durch ein Authentisierung- und Schlüsselvereinbarungsprotokoll. Der Sitzungsschlüsselgenerator CC wird im dargestellten Ausführungsbeispiel nur nach einer erfolgten Nutzer-Authentisierung bereitgestellt, hier durch Eingabe eines Boot-Passworts. In weiteren, nicht dargestellten Ausführungsbeispielen kann eine Nutzer-Authentisierung auch mittels einer Eingabe einer PIN oder mittels einer biometrischen Authentisierung, optional zusätzlich mit einer Überprüfung von Manipulations-Sensoren, etwa einer Überprüfung von Tamper-Sensoren, oder einem Gehäuseschalter, erfolgen. In weiteren, nicht eigens dargestellten Ausführungsbeispielen, welche im Übrigen dem dargestellten Ausführungsbeispiel entsprechen, kann eine Nutzer-Authentisierung auch entfallen.

Der Sitzungsschlüsselgenerator CC ist im dargestellten Ausführungsbeispiel in an sich bekannter Weise als Secure Element, d. h. als dedizierter Security-Baustein, realisiert. In weiteren, nicht eigens dargestellten Ausführungsbeispielen kann der Sitzungsschlüsselgenerator CC allerdings auch in einer Firmware in einem Trusted Execution Environment, beispielsweise als ARM Trust Zone, oder als Intel SGX eines Prozessors oder als separater Kern eines ICs/ASICs/SoCs mit mehreren Kernen oder als Software in obfuszierter Form oder als Management Engine eines Prozessors oder als eines oder mehrere ASICs realisiert sein.

Dem Hochgeschwindigkeitsentschlüsselungsmodul HSCE werden mittels einer Kommunikationsschnittstelle CIF verschlüsselte Daten eines Netzwerks NET übermittelt, welche nach ihrer Entschlüsselung als entschlüsselte Daten in Gestalt eines Klartexts mittels einer weiteren Kommunikationsschnittstelle CIF dem Netzwerk NET zurückgegeben werden. Das Kryptographiemodul CE nutzt den von dem Modul SKD zur Festlegung eines Sitzungsschlüssels des Sitzungsschlüsselgenerators CC erhaltenen Sitzungsschlüssel, um die verschlüsselten Daten zu entschlüsseln.

Die entschlüsselten Daten, also der Klartext, wird einem Klartextdatenextraktor CDE übermittelt, welcher einen Teil ECD des Klartextes von dem Klartext extrahiert. Dieser Teil ECD des Klartextes wird einer Klartextplausiblierungseinheit CDP des Sitzungsschlüsselgenerators CC übermittelt. Die Klartextplausibilisierungseinheit CDP prüft nun den Teil des Klartexts ECD daraufhin, ob der Klartext tatsächlich mit dem zuvor vom Modul SKD zur Festlegung eines Sitzungsschlüssels generierten Sitzungsschlüssels aus den verschlüsselten Daten erzeugt worden ist oder ob der Klartext auf andere Weise, etwa mit einem nicht zulässigen Sitzungsschlüssel, erhalten worden ist. Wie die Klartextplausibilisierungseinheit CDP des Sitzungsschlüsselgenerators CC genau prüft, wird weiter unten näher erläutert.

Die Prüfung mittels der Klartextplausibilisierungseinheit CDP resultiert nun in einem binären Prüfungsergebnis, entweder einer Bestätigung, dass der Klartext mithilfe eines Sitzungsschlüssels des Moduls SKD zur Bestimmung eines Sitzungsschlüssels generiert worden ist oder in einer Falsifizierung, dass der Klartext mithilfe des Moduls SKD zur Bestimmung eines Sitzungsschlüssels generiert worden ist. In ersten Fall erfolgt die Entschlüsselung mittels des Hochgeschwindigkeitsentschlüsselungsmoduls HSCE wie vorgesehen und der Betrieb der Verschlüsselungsvorrichtung HSM wird unverändert fortgesetzt. Erfolgt jedoch eine Falsifizierung, so wird das Modul SKD zur Festlegung eines Sitzungsschlüssels gesperrt, sodass mittels des Moduls SKD zur Festlegung eines Sitzungsschlüssels keine weiteren Sitzungsschlüssel mehr aus dem Langzeitschlüssel LTK erzeugt werden können. Mithin kann auch das Hochgeschwindigkeitsentschlüsselungsmodul HSCE auch keine weitere Entschlüsselung von verschlüsselten Daten mehr vornehmen.

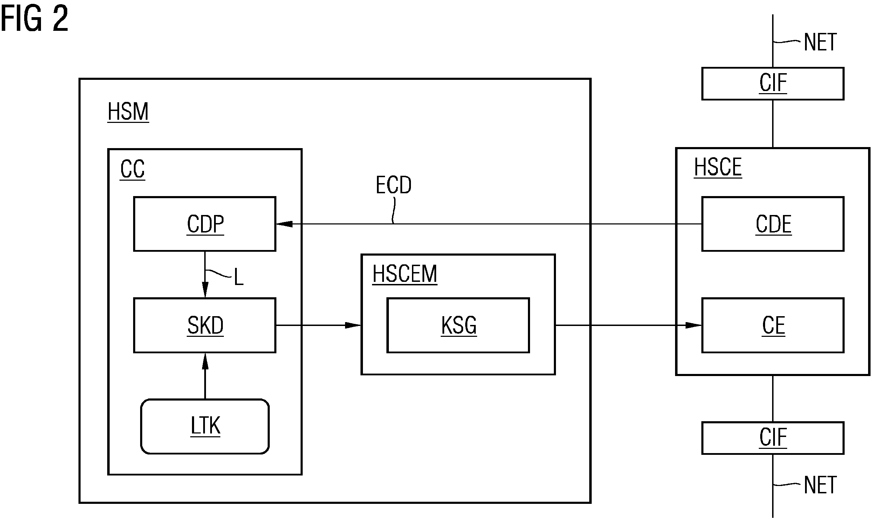

Im in Fig. 2 dargestellten Ausführungsbeispiel wird dem Kryptographiemodul CE der Sitzungsschlüssel nicht direkt von dem Modul SKD zur Festlegung eines Sitzungsschlüssels übermittelt, sondern der Sitzungsschlüssel wird jeweils einem separaten Hochgeschwindigkeits-Kryptographiemodul HSCEM der Verschlüsselungsvorrichtung HSM übermittelt, die mittels des Sitzungsschlüssels einen Schlüsseldatenstrom erzeugt. Dieser Schlüsseldatenstrom wird nun dem Hochgeschwindigkeitsentschlüsselungsmodul HSCE übermittelt, die wiederum den Schlüsseldatenstrom an das Kryptographiemodul CDE des Hochgeschwindigkeitsentschlüsselungsmoduls HSCE übermittelt. Im Übrigen entspricht das in Fig. 2 dargestellte Ausführungsbeispiel dem in Fig. 1 dargestellten Ausführungsbeispiel. Grundsätzlich kann der Schlüsseldatenstrom der Fig. 2 auch als ein zweiter, kontinuierlich generierter, Sitzungsschlüssel im Sinne der Erfindung, welcher aus dem Langzeitschlüssel abgeleitet wird, aufgefasst werden.

Die Funktionsweise der Klartextplausibilisierungseinheit CDP des Sitzungsschlüsselgenerators CC ist dabei wie folgt:
Die Plausibilisierung des Teils ECD des Klartextes erfolgt derart, dass beispielsweise eine Prüfung einer CRC-Prüfsumme oder einer kryptographischen Prüfsumme oder eines eingebetteten Wasserzeichens des Klartexts, insbesondere eines kryptographischen Wasserzeichens erfolgt. Alternativ oder zusätzlich ist ein vorgesehener Nutzungskontext eines Sitzungsschlüssels, beispielsweise ein für den Sitzungsschlüssel festgelegter Nutzungszeitraum, oder eine Identifizierungsinformation eines Senders und/oder eines Empfängers des Teils ECD des Klartextes oder ein Format des Teils ECD des Klartexts Gegenstand der Plausibilisierung. So kann die Plausibilisierung eine Prüfung umfassen, ob es sich bei den entschlüsselten Daten um eine gültige Safety-Nachricht eines Safety-Protokolls handelt, etwa einen aktuellen Zeitstempel enthält und eine gültige CRC-Safety-Prüfsumme aufweist. Zusätzlich kann die Plausibilisierung eine Prüfung einer Folge von entschlüsselten Nachrichten umfassen, beispielsweise eine Prüfung auf Übereinstimmung von empfangenen entschlüsselten Daten mit gesendeten verschlüsselten Daten. Das Vorhandensein von Wasserzeichen kann mittels Bitoperation, beispielsweise mittels eines Bit-weisen Vergleichs, erfolgen oder mittels einer Nutzung von Mustererkennungsalgorithmen, beispielsweise mittels einer Principal-Component-Analysis oder mittels eines Neuronalen Netzwerks oder mittels Signalverarbeitungsalgorithmen, beispielsweise mittels Filterung oder Korrelation oder Faltung oder Transformation, etwa der Fast-FourierTransformation, oder mittels Ermittelns und Prüfens von statistischen Parametern wie Mittelwert und Varianz. Dabei wird überprüft, ob erwartete Daten eines Wasserzeichens in dem bereitgestellten Teil ECD der Klartextdaten enthalten sind.

## Patentansprüche

1. Vorrichtung zum Empfang kryptographisch geschützter Kommunikationsdaten mit einem Schlüsselgenerator (CC) zur Generation von Sitzungsschlüsseln und einem mit dem Schlüsselgenerator signalverbundenen Empfangsmodul (HSCE), das zum Empfang und zur Entschlüsselung kryptographisch geschützter Kommunikationsdaten mittels vom Schlüsselgenerator (CC) generierter und übermittelter Sitzungsschlüssel in eine Klartextinformation (ECD) ausgebildet ist, sowie mit einem mit dem Empfangsmodul (HSCE) signalverbundenen Prüfmodul (CDP), das ausgebildet ist, die Klartextinformation (ECD) einer Prüfung auf eine Kontextinformation, kennzeichnend einen Kommunikationskontext der verschlüsselten Kommunikationsdaten, zu unterziehen, welche eingerichtet ist, abhängig von einem Ergebnis der Prüfung den Empfang oder die Entschlüsselung zu beschränken.

2. Vorrichtung nach dem vorhergehenden Anspruch, bei welchem der Kommunikationskontext von dem Sitzungsschlüssel abhängt oder dem Sitzungsschlüssel zugeordnet ist, insbesondere ein Kommunikationskontext in der Art eines Kommunikationszusatzes, vorzugsweise ein digitales Wasserzeichen.

3. Vorrichtung nach dem vorhergehenden Anspruch, bei welcher Vorrichtung ausgebildet ist, einen Teil der Klartextinformation (ECD) dem Prüfmodul (CDP) zu übermitteln und das Prüfmodul (CDP) ausgebildet ist, die Klartextinformation (ECD) derart der Prüfung zu unterziehen, dass das Prüfmodul (CDP) den Teil der Klartextinformation (ECD) der Prüfung unterzieht.

4. Vorrichtung nach einem der vorhergehenden Ansprüche, bei welchem die Kontextinformation eine Information über einen Nutzungszeitraum oder eine Identifizierungsinformation von Sender und/oder Empfänger und/oder ein Format der kryptographischen Kommunikationsdaten und/oder der Klartextinformation (ECD) und/oder eine Protokollkonformität der Klartextinformation (ECD), insbesondere mit einem Sicherheitsprotokoll, und/oder eine Gültigkeit eines Zeitstempels oder eines Prüfwerts, insbesondere eines CRC-Prüfwerts, umfasst.

5. Vorrichtung nach einem der vorhergehenden Ansprüche, bei welchem die Kontextinformation ein Wasserzeichen, insbesondere ein kryptographisch geschütztes Wasserzeichen, umfasst.

6. Vorrichtung nach einem der vorhergehenden Ansprüche, bei welchem die Kontextinformation mindestens ein Prüfdatum umfasst.

7. Vorrichtung nach einem der vorhergehenden Ansprüche, welche zusätzlich zum Verschlüsseln von Sendeinformation in verschlüsselte Sendedaten mittels vom Sitzungsschlüsselgenerator generierter und übermittelter Sitzungsschlüssel ausgebildet ist, wobei die Vorrichtung ausgebildet ist, die Verschlüsselung der Sendedaten mittels Sitzungsschlüssel zu prüfen.

8. Vorrichtung nach einem der vorhergehenden Ansprüche, welche ein Mobilfunkgerät (HSM) ist.

9. Vorrichtung nach einem der vorhergehenden Ansprüche, welches ein industrielles IoT-Gerät (HSM), insbesondere ein Steuergerät, vorzugswiese ausgebildet zum Empfang verschlüsselter Kommunikationsdaten in Form von Steuerinformation und/oder Sicherheitsinformation, ist.

10. Verfahren zum Empfang kryptographisch geschützter Kommunikationsdaten mittels eines Schlüsselgenerators (CC) zur Generation von Sitzungsschlüsseln und eines mit dem Schlüsselgenerator signalverbundenen Empfangsmoduls (HSCE), das zum Empfang und zur Entschlüsselung kryptographisch geschützter Kommunikationsdaten mittels vom Schlüsselgenerator generierter und übermittelter Sitzungsschlüssel in eine Klartextinformation (ECD) ausgebildet ist, wobei die Klartextinformation (ECD) einer Prüfung auf eine Kontextinformation, kennzeichnend einen Kommunikationskontext der verschlüsselten Kommunikationsdaten, unterzogen wird und abhängig von einem Ergebnis der Prüfung der Empfang oder die Entschlüsselung beschränkt wird.

11. Verfahren nach dem vorhergehenden Anspruch, ausgeführt mit einer Vorrichtung (HSM) nach einem der Ansprüche 1 bis 9.
